# EUROPEAN PATENT SPECIFICATION

(11) **EP 2 608 971 B1**
(45) Date of publication and mention of the grant of the patent: **27.05.2015**
(21) Application number: 11752175.7
(22) Date of filing: 25.08.2011
(51) Int. Cl.: B60D 1/02, B60D 1/14, B60D 1/46, B60D 1/52

(54) **TRACTOR REAR HITCH**
RÜCKWÄRTIGE KUPPLUNG FÜR EINEN TRAKTOR
ATTELAGE ARRIÈRE DE TRACTEUR

(30) Priority: 26.08.2010 GB 201014235
(43) Date of publication of application: 03.07.2013
(73) Proprietor: Agco SA, 60026 Beauvais (FR)
(72) Inventor: BOITTIN, Philippe, F-60570 Laboissiere en Thelle (FR); DELETOILLE, Guillaume, F-62134 Anvin (FR); MAILLET, Thibaut, F-60510 Bonlier (FR)
(74) Representative: AGCO Intellectual Property Department
(86) International application number: PCT/EP2011/064657
(87) International publication number: WO 2012/025601

(56) References cited:
- EP-A1- 0 047 961
- EP-A2- 0 455 251
- DE-U1- 8 701 814
- FR-A- 1 540 764

## Description

The invention relates to a rear hitch for a tractor comprising a drawbar and a drawbar support frame, the drawbar being secured to the support frame by a removal pin which is inserted through respective holes in the support frame and the drawbar. In particular the invention relates to a drawbar release mechanism which allows a user to remove the drawbar from the support frame.

For many decades tractors have been fitted with drawbars which allow the attachment of various towed implements such as balers, trailers and cultivation equipment. Existing systems allow the drawbar to be removed or replaced to allow for different implements to be attached. Furthermore, the separation between implement and tractor can be adjusted by moving the drawbar fore and aft between various fixed positions.

The operation of removing the drawbar can be time consuming, cumbersome and often hazardous for the operator. The location of the removal pin is typically difficult to reach and is often low down underneath the chassis of the tractor. This not only requires the operator to alight from the cab but also to kneel down on the ground in a dirty environment.

Attempts have been made to ease the operation of releasing the drawbar. For example, EP-1,913,804 discloses a drawbar release mechanism having a slideable cam slot which is moved in a longitudinal direction via a user-operated handle. The drawbar locking pin is pinned into the cam slot so that when a user pulls the handle towards the rear of the tractor the locking pin is raised thus releasing the draw bar. However; it has been found that the cam arrangement disclosed delivers an inadequate lifting force upon the pin thereby requiring a significant force to be applied to the handle. In turn, this increases the risk of failure of the numerous components involved.

The preamble of claim 1 is shown in document FR 1.540.764.

It is an object of the invention to provide an improved drawbar release mechanism which at least partly alleviates the aforementioned problems.

In accordance with the invention there is provided a tractor rear hitch according claim 1.

The simple lever arrangement delivers a significantly greater lifting force upon the pin as compared to existing systems. Furthermore, the reduced complexity and number of components presents a significant cost saving and increase in reliability and robustness. The provision of a pedal-operated release mechanism delivers a significant ergonomic advantage in that the operator no longer need apply the pin lifting force with their hands close to the ground. Advantageously, such an arrangement reduces the risk of injury.

The forward end of the drawbar release member comprises a U-shaped portion which is pivotally mounted to the support frame in two places, the pivotal mountings being transversely spaced either side of the support frame and being pivotal about a common transverse axis. Advantageously, by securing a U-shaped member at two positions the force applied to the pin is transversely centred and sideway stresses in the mountings are eliminated.

The hitch may further comprise lever biasing means to bias the forward end of the drawbar release member downward and the pin into the engaged position, thereby reducing the risk of the pin inadvertently lifting and releasing the drawbar. Furthermore, the provision of lever biasing means eliminates the need for the operator to positively move the pin into the engaged position. The biasing means preferably comprises a spring secured to a pivotal mounting between the lever and the support frame.

The pedal is preferably pivotally mounted to the lever so as to allow the pedal to pivot relative to the lever about a transverse axis between a stowed position and an operating position in which a downward force on the pedal is transmitted directly to the lever. The inventor has recognised that a pedal positioned in an ergonomically friendly position conflicts with the need to avoid protrusions from the profile of the tractor which may otherwise strike rough terrain. By providing a pedal which can be moved into a stowed position the release mechanism does not extend outside significantly of the tractor profile.

Pedal biasing means may be provided to bias the pedal into the stowed position. For example the pivotal connection may include a coil spring to bias the pedal upwardly into the stowed position.

In a preferred embodiment the tractor rear hitch further comprises a releasable lever locking mechanism which positively secures the drawbar release member in a lowered position, thereby improving the integrity and safety of the drawbar release mechanism. The level locking mechanism preferably comprises a bolt which is slidably movable between a locking position and a release position. The bolt preferably engages in a hole formed in the drawbar release member when the bolt is in the locked position and the drawbar release member is in the lowered position. The positive engagement of the bolt into the drawbar release member prevents inadvertent lifting of the pin from the drawbar. Bolt biasing means may be provided to bias the bolt into the locking position. For example, this may include a coil spring placed upon the bolt and serving to bias the bolt towards the front of the tractor into the locking position.

The bolt can preferably be slid into the locking position when the drawbar release member is in a raised position so as to maintain the drawbar release member, and thus the pin, in the raised position. Advantageously, this allows the operator to manipulate the released drawbar without the need for them to maintain an applied force to the pedal. In other words, the lever locking mechanism can serve to lock the drawbar release member into either the raised or lowered position.

The bolt is preferably slidably mounted to the support frame so that the bolt can slide in a fore and aft direction.

The bolt is preferably manually actuated from the rear of the tractor. Alternatively, the bolt may be automatically moveable using a hydraulic actuator for example. It is envisaged also that a sensor may be provided to sense when the lever and locking mechanism are safely in the operating position and to present an alarm to the driver when not.

Further advantages of the invention will become apparent from the following description of preferred embodiments with reference to the appended drawings in which:
Figure 1 is a perspective view of a tractor rear hitch in accordance with the invention;
Figure 2 is a rear view of the tractor rear hitch of Figure 1;
Figure 3 is a rear facing perspective view of the lever locking mechanism of the tractor rear hitch of Figure 1 showing the drawbar release member locked in the lowered position;
Figure 4 is a forward facing perspective view of the lever locking mechanism shown in Figure 3;
Figure 5 is a perspective view of the lever locking mechanism of Figure 4 shown in the release position;
Figure 6 is a forward facing perspective view of part of the tractor rear hitch of Figure 1 showing the pedal in an operating position and the lever locking mechanism in a release position;
Figure 7 is a forward facing perspective view of part of the tractor rear hitch of Figure 1 showing the lever and drawbar pin in the raised position; and,
Figure 8 is a close-up view of part of the tractor rear hitch of Figure 1 showing the lever locked into the raised position by the lever locking mechanism.

Following references to the terms 'longitudinal', 'transverse' and 'vertical' are made in relation to a tractor fitted with the rear hitch described travelling in the normal direction of travel. For example, the term 'longitudinal' is intended to mean in the fore and aft direction whilst the term 'transverse' is used in relation to left and right direction.

### Construction

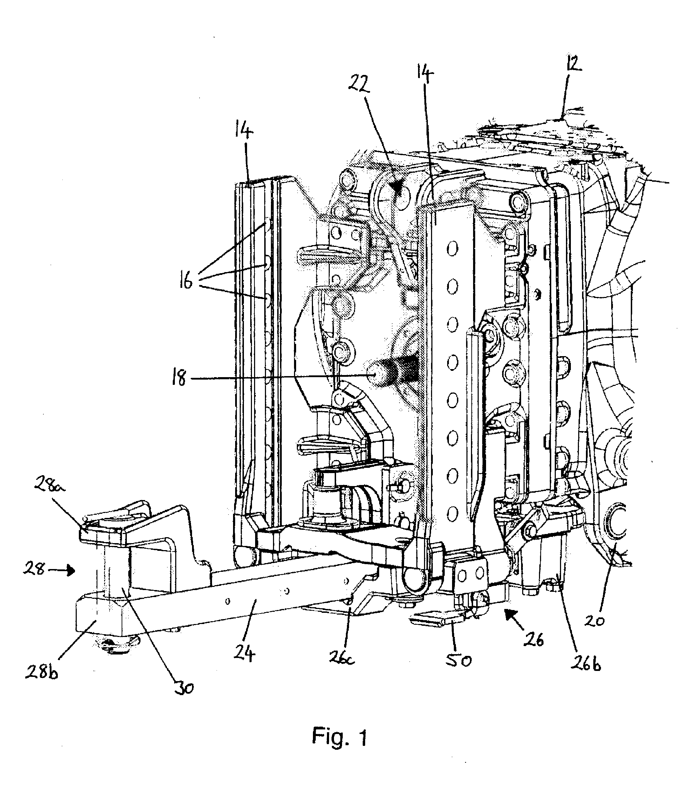

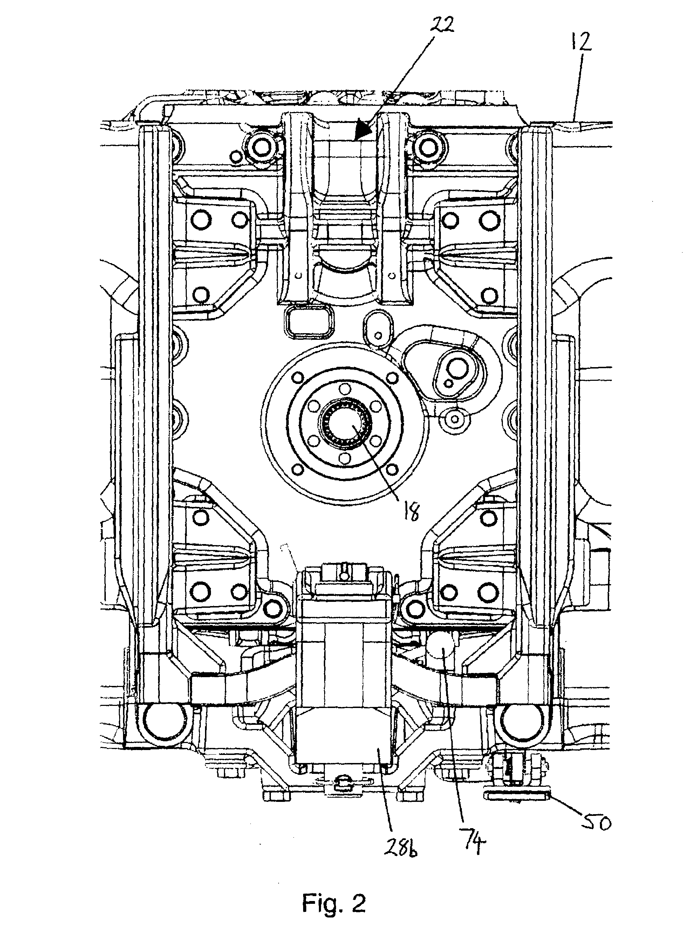

With reference to Figures 1 and 2, a tractor rear hitch, designated generally by 10, is bolted to a transaxle of a tractor, part of which is shown in Figures 1 and 2 and designated generally by 12. It should be understood that the transaxle 12 provides part of the chassis or frame of the tractor and houses the transmission and rear axle in this example. The detailed construction of the transaxle is not relevant to the understanding of the invention and further description will not be given.

The rear hitch 10 comprises two vertical rails 14 for holding an implement connector 15, the height of which can be adjusted by the use of various vertically spaced holes 16. A PTO shaft 18 exits the rear of the transaxle between the vertical rails 14, to which powered implements may be connected for the extraction of torque from the tractor engine.

Lower links (not shown) of a three-point-linkage can be connected to attachment points 20 in a known manner. The rear hitch 10 further comprises a top-link mounting bracket 22 for attachment of a top-link (not shown) associated with a three-point-linkage.

A drawbar 24 is held in position by a drawbar support frame, designated generally by 26, which is bolted to the underside of the transaxle 12. The drawbar 24 comprises a jaw 28 formed by an upper jaw element 28a and a lower jaw element 28b. A vertical drawbar pin 30 is held in position in holes formed in the respective jaw portions 28a, 28b. The drawbar pin 30 is releasable and engages with a hole on a implement drawbar to secure the implement to the tractor.

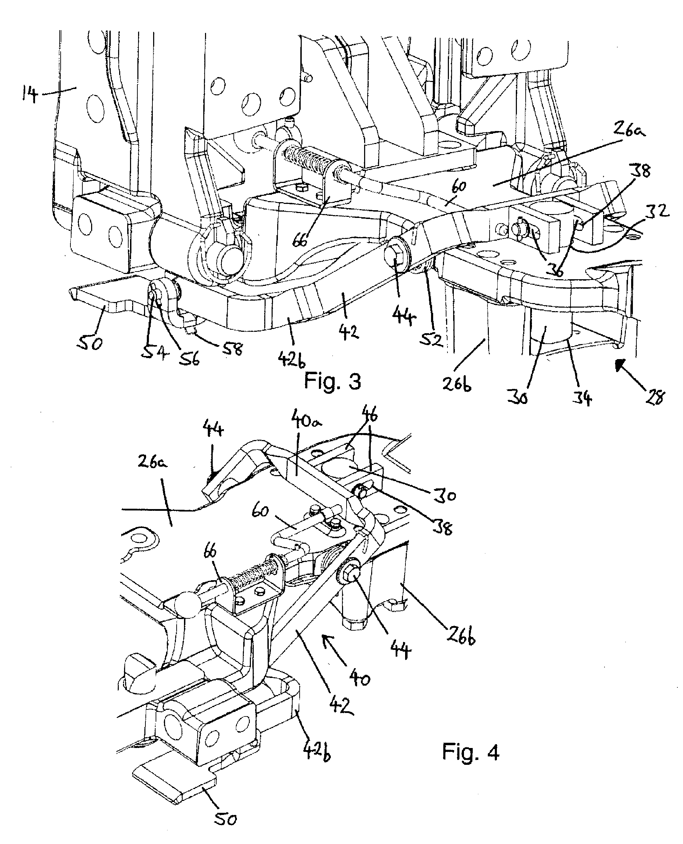

With reference also to Figures 3 and 4 the drawbar support frame 26 will be described in more detail. The support frame 26 comprises an upper plate 26a which is integrated with the rear hitch assembly 10 and provides the upper boundary for movement for the drawbar 24. Furthermore, the support frame 26 includes a forward retaining member 26b and a rear retaining member 26c, the former being bolted to the underside of upper plate 26a, the latter forming an integral part of the support frame with upper plate 26a. Together, the support frame parts provide a channel into which drawbar 24 is inserted. A rear channel portion 28 can be seen in Figure 3 and is provided by forward retaining member 26b and upper place 26a. It will be appreciated that the drawbar 24 is omitted from Figures 3 and 4 for clarity.

The drawbar 24 is secured to the support frame 26, and thus the tractor, by a vertical pin 30 which is inserted through holes 32, 34 formed in the upper plate 26a and forward retaining member 26b respectively, and a hole in the drawbar 24. The pin 30 can be accessed manually through the bottom of hole 34 in case of failure of the release mechanism.

The pin 30 is held in position by means of a cross-pin 36 which extends transversely either side from an upper portion of the pin 30. The cross-pin 36 is slidably mounted in respective longitudinally-extending slots 38 which are formed in a drawbar release member to be described in more detail below.

The drawbar release member, designated generally at 40, comprises a rigid lever 42 which is pivotally mounted to the support frame 26. A forward end portion 40a of the drawbar release member 42 is generally U-shaped and is pivotally mounted to the support frame 26 in two places either side of the upper plate 26a by bolts 44. A pair of forwardly extending links 46 are secured to the U-shaped portion 40a, the links 46 having formed therein aforementioned longitudinally-extending slots 38 which provide the connection to the vertical pin 30.

The lever 42 extends generally rearwardly and downwardly from the right hand pivoting connection (provided by bolt 44) and is terminated at the rear of the hitch 10 by a pivoting connection to a pedal 50. The lever 42 includes a bent portion 42b which allows desired positioning of pedal 50.

Turning back to the pivoting connections provided by bolts 44, biasing means in the form of a coil spring 52 on each bolt 44 is provided to bias the pin 30 into a lowered (operating) position.

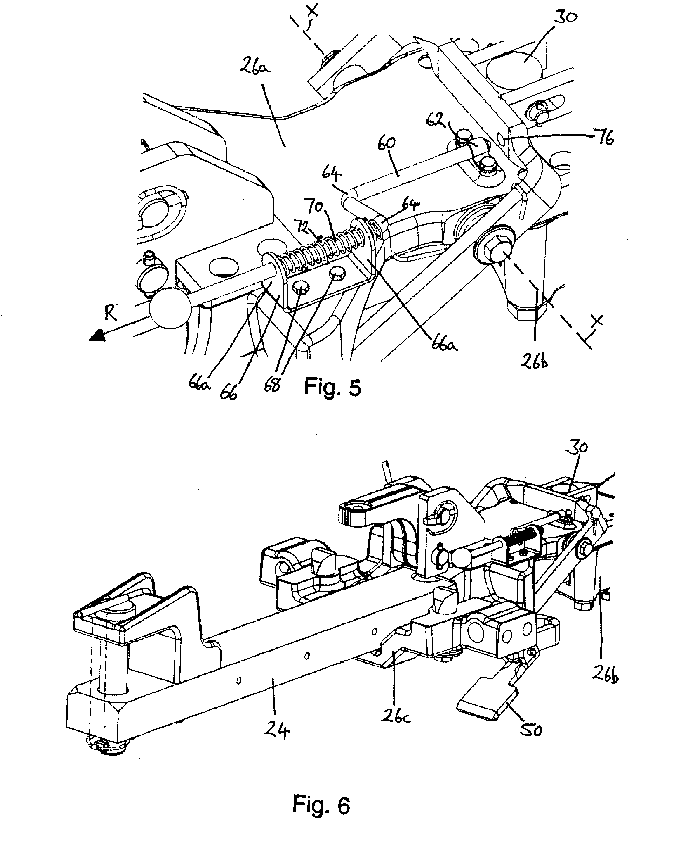

Pedal 50 is secured to the end of lever member 42 by a cross-pin 54 which allows the pedal 50 to pivot between a stowed position (Figure 3) and an operating position (Figure 6). Cross-pin 54 is held in position by a retaining element 56 on each side of the joint. Pedal biasing means in the form of a spring 58 is provided on the cross-pin 54 and acts between the pedal 50 and the lever 42 to bias the pedal 50 into the raised (stowed) position, as shown in Figures 3 and 4 for example.

With reference in particular to Figures 3,4 and 5, a releasable lever locking mechanism in the form of a slidably moveable bolt 60 is provided. At its forward end bolt 60 is secured by a retaining element 62 bolted to upper plate 26a so as to allow fore and aft sliding movement of bolt 60. Two elbows 64 translate the rearward extension of bolt 60 to the right. At its rear end, bolt 60 is held in position by U-shaped bracket 66 secured to the upper plate 26a by bolts 68. A coil spring 70 is held between two upright members 66a of the U-shaped bracket 66 and serves to act in conjunction with pins 72, disposed on bolt 60, to bias the bolt 60 in the forward direction. The rear end of bolt 60 is terminated with a knob 74 which can also be seen in Figure 2.

### Operation

When inserted for use as shown in Figure 1, drawbar 24 is held in longitudinal position by pin 30 wherein the forward end 40a of the drawbar release member is in a lowered (operating) position and held there by positive engagement of the bolt 60 in hole 76. Furthermore, pedal spring 58 holds the pedal 50 in the stowed (or raised) position as shown in Figure 3.

When an operator wishes to remove or release drawbar 24, bolt 60 is moved in a rear direction against the force of spring 70 by pulling knob 74 in the direction indicated by arrow R in Figure 5. Following this, a downward pressure is applied to pedal 50 against the force of spring 58 so as to move the pedal 50 into the operating position as shown in Figure 6. At this point a continued downward force on pedal 50 is transmitted to lever member 42 which causes a raising of pin 30 via a pivoting movement around axis X.

It should be appreciated that the downward force on pedal 50 can be applied by the operator's foot whilst their hand can be used to withdraw bolt 60. This double operation is ergonomically friendly whilst ensuring a secure locking mechanism for the drawbar 24.

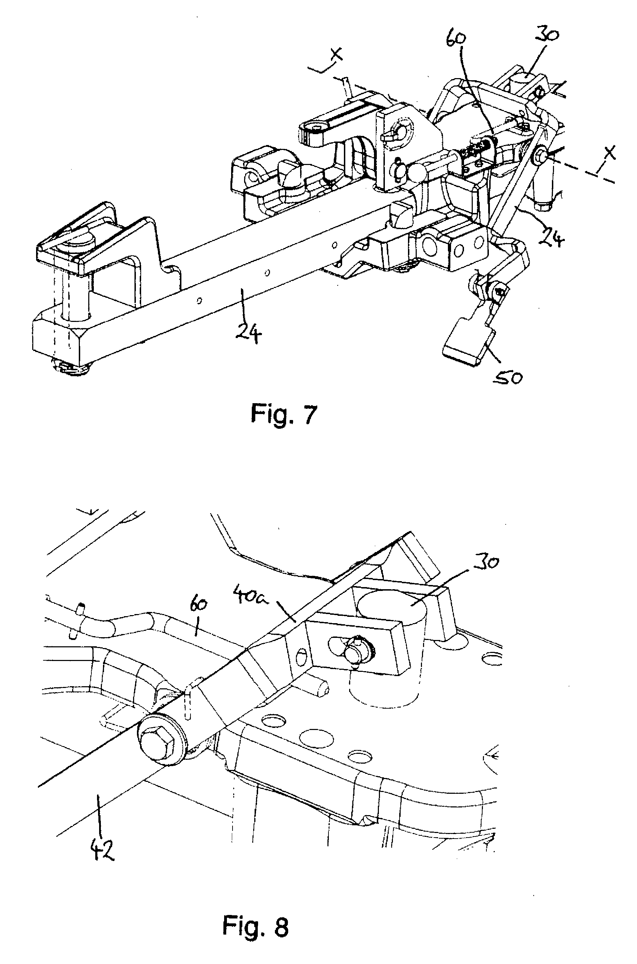

When in the fully raised position, that is when the pedal 50 has reached it maximum permitted downward travel, knob 74 can be released. As shown in Figure 8, bolt 60 is forced forward by spring 70 so that it's forward most end moves under U-shaped portion 40a. This allows the user to remove the downward force on the pedal 50 whilst maintaining the pin 30 in the raised position. Advantageously, this leaves the operator completely available to manipulate the drawbar 24 without having to apply any force to either the pedal 50 or knob 74.

When completed the operator can simply lower pin 30 by withdrawing bolt 60 causing the drawbar release member 40 to fall into the operating position. By releasing the force on bolt 60 the biasing spring again causes locking engagement into hole 76.

## Claims

1. A tractor rear hitch (10) comprising a drawbar (24) and a drawbar support frame (26), the drawbar being secured to the support frame by a pin (30) which is inserted through respective holes in the support frame and the drawbar, and a drawbar release member (40) comprising a lever (42) which is pivotally mounted to the support frame, and a pedal (50) disposed at a rear end of the lever and at a height below the pivot mount for the lever, the lever being pivotally connected at a forward end (40a) to the pin so as to lift the pin, and thus release the drawbar, when the pedal is forced downward, **characterised in that** the forward end of the drawbar release member comprises a U-shaped portion which is pivotally mounted to the support frame in two places, the pivotal mountings being transversely spaced either side of the support frame and being pivotal about a common transverse axis.

2. A tractor rear hitch according to Claim 1, further comprising lever biasing means (52) to bias the forward end of the drawbar release member downward and the pin into an engaged position.

3. A tractor rear hitch according to Claim 2, wherein the biasing means comprises a spring secured to a pivotal mounting between the lever and the support frame.

4. A tractor rear hitch according to any preceding claim, wherein the pedal is pivotally mounted to the lever so as to allow the pedal to pivot relative to the lever about a transverse axis between a stowed position and an operating position in which a downward force on the pedal is transmitted directly to the lever.

5. A tractor rear hitch according to Claim 4, further comprising pedal biasing means (58) to bias the pedal into the stowed position.

6. A tractor rear hitch according to any preceding claim, further comprising a releasable lever locking mechanism (60) which positively secures the drawbar release member in an operating position.

7. A tractor rear hitch according to Claim 6, wherein the lever locking mechanism comprises a bolt which is slidably moveable between a locking position and a release position.

8. A tractor rear hitch according to Claim 7, wherein the bolt engages in a hole formed in the lever when the bolt is in the locked position and the drawbar release member is in the operating position.

9. A tractor rear hitch according to Claim 7 or Claim 8. further comprising bolt biasing means (70) to bias the bolt into the locking position.

10. A tractor rear hitch according to any one of Claims 7, 8, or 9, wherein the bolt can be slid into the locking position when the drawbar release member is in a raised position so that the bolt maintains the drawbar release member, and thus the pin, in the raised position.

11. A tractor rear hitch according to any one of Claims 7 to 10, wherein the bolt is slidably mounted to the support frame.

12. A tractor rear hitch according to Claim 11, wherein the bolt is manually actuated from the rear of the tractor.

## Patentansprüche

1. Rückwärtige Kupplung oder Anbauvorrichtung (10) für ein Zugfahrzeug oder einen Traktor mit einer Anhängedeichsel, Anhängeschiene, Ackerschiene oder Zugstange (24) und einem Tragrahmen (26) für die Anhängedeichsel, Anhängeschiene, Ackerschiene oder Zugstange, wobei die Anhängedeichsel, Anhängeschiene, Ackerschiene oder Zugstange an dem Tragrahmen durch einen Pin (30) befestigt oder gesichert ist, der durch entsprechende Löcher in dem Tragrahmen und der Anhängedeichsel, Anhängeschiene, Ackerschiene oder Zugstange eingesetzt ist, und mit einem Freigabeelement (40) für die Anhängedeichsel, Anhängeschiene, Ackerschiene oder Zugstange, wobei das Freigabeelement (40) einen Hebel (42) aufweist, der verschwenkbar an dem Tragrahmen montiert ist, und mit einem Pedal (50), welches an dem hinteren Ende des Hebels und in einer Höhe unter der Schwenkbefestigung für den Hebel angeordnet ist, wobei der Hebel an einem vorderen Ende (40a) verschwenkbar mit dem Pin verbunden ist, um den Pin anzuheben und damit die Anhängedeichsel, Anhängeschiene, Ackerschiene oder Zugstange freizugeben, wenn das Pedal nach unten betätigt oder gezwungen wird, **dadurch gekennzeichnet, dass** das vordere Ende des Freigabeelements für die Anhängedeichsel, Anhängeschiene, Ackerschiene oder Zugstange einen U-förmigen Bereich aufweist, der an zwei Orten verschwenkbar an dem Tragrahmen montiert ist, wobei die schwenkbaren Montierungen auf beiden Seiten des Tragrahmens transversal beabstandet sind und um eine gemeinsame transversale Achse verschwenkbar sind.

2. Kupplung oder Anbauvorrichtung nach Anspruch 1 mit einem Beaufschlagungsorgan (52) für den Hebel zum Beaufschlagen des vorderen Endes des Freigabeelements der Anhängedeichsel, Anhängeschiene, Ackerschiene oder Zugstange nach unten und zum Beaufschlagen des Pins in eine Eingriffsposition oder eine eine Wechselwirkung herbeiführende Position.

3. Kupplung oder Anbauvorrichtung nach Anspruch 2, wobei das Beaufschlagungsorgan eine Feder aufweist, die an einer Schwenk-Montierung zwischen dem Hebel und dem Tragrahmen befestigt oder gesichert ist.

4. Kupplung oder Anbauvorrichtung nach einem der vorhergehenden Ansprüche, wobei das Pedal schwenkbar an dem Hebel montiert ist unter Ermöglichung einer Verschwenkung des Pedals relativ zu dem Hebel um eine transversale Achse zwischen einer Vorratsposition und einer Betriebsposition, in welcher eine nach unten gerichtete Kraft auf das Pedal direkt an den Hebel übertragen wird.

5. Kupplung oder Anbauvorrichtung nach Anspruch 4 mit einem Beaufschlagungsorgan (58) für das Pedal zur Beaufschlagung des Pedals in die Vorratsposition.

6. Kupplung oder Anbauvorrichtung nach einem der vorgehenden Ansprüche mit einem freigebbaren Verriegelungsmechanismus (60) für den Hebel, welcher in einer Betriebsposition formschlüssig das Freigabeelement für die Anhängedeichsel, die Anhängeschiene, die Ackerschiene oder die Zugstange sichert.

7. Kupplung oder Anbauvorrichtung nach Anspruch 6, wobei der Verriegelungsmechanismus für den Hebel einen Bolzen aufweist, der gleitend bewegbar ist zwischen einer Verriegelungsposition und einer Freigabeposition.

8. Kupplung oder Anbauvorrichtung nach Anspruch 7, wobei der Bolzen in ein Loch eingreift, welches in dem Hebel gebildet ist, wenn sich der Bolzen in der Verriegelungsposition befindet und das Freigabeelement für die Anhängedeichsel, Anhängeschiene, Ackerschiene oder Zugstange in der Betriebsposition ist.

9. Kupplung oder Anbauvorrichtung nach Anspruch 7 oder 8 mit einem Beaufschlagungsorgan (70) für den Bolzen zur Beaufschlagung des Bolzens in die Verriegelungsposition.

10. Kupplung oder Anbauvorrichtung nach einem der Ansprüche 7, 8 oder 9, wobei der Bolzen durch eine Gleitbewegung in die Verriegelungsposition überführt werden kann, wenn das Freigabeelement für die Anhängedeichsel, Anhängeschiene, Ackerschiene oder Zugstange in der angehobenen Position ist, so dass der Bolzen das Freigabeelement für die Anhängedeichsel, Anhängeschiene, Ackerschiene oder Zugstange, und damit auch den Pin in der angehobenen Position hält.

11. Kupplung oder Anbauvorrichtung nach einem der Ansprüche 7 bis 10, wobei der Bolzen gleitend an dem Tragrahmen montiert ist.

12. Kupplung oder Anbauvorrichtung nach Anspruch 11, wobei der Bolzen manuell von der Rückseite des Traktors oder Zugfahrzeugs betätigt wird.

## Revendications

1. Attelage arrière de tracteur (10) comprenant une barre d'attelage (24) et un châssis support de barre d'attelage (26), la barre d'attelage étant arrimée au châssis support par une tige (30) qui est insérée à travers des orifices respectifs dans le châssis support et la barre d'attelage, et un organe de libération de barre d'attelage (40) comprenant un levier (42) qui est monté en pivotement sur le châssis support, et une pédale (50) disposée au niveau d'une extrémité arrière du levier et à une hauteur en dessous de la fixation pivotante du levier, le levier étant raccordé en pivotement au niveau d'une extrémité avant (40a) à la tige, de façon à lever la tige et ainsi libérer la barre d'attelage lorsque la pédale est forcée vers le bas, **caractérisé en ce que** l'extrémité avant de l'organe de libération de barre d'attelage comprend une portion en U qui est montée en pivotement sur le châssis support en deux endroits, les fixations pivotantes étant espacées transversalement des deux côtés du châssis support et pouvant pivoter autour d'un axe transversal commun.

2. Attelage arrière de tracteur selon la revendication 1, comprenant en outre un moyen de sollicitation de levier (52) pour solliciter l'extrémité avant de l'organe de libération de barre d'attelage vers le bas et la tige dans une position enclenchée.

3. Attelage arrière de tracteur selon la revendication 2, dans lequel le moyen de sollicitation comprend un ressort arrimé à une fixation pivotante entre le levier et le châssis support.

4. Attelage arrière de tracteur selon l'une quelconque des revendications précédentes, dans lequel la pédale est montée en pivotement sur le levier de façon à permettre à la pédale de pivoter par rapport au levier autour d'un axe transversal entre une position repliée et une position de fonctionnement, dans laquelle une force vers le bas sur la pédale est transmise directement au levier.

5. Attelage arrière de tracteur selon la revendication 4, comprenant en outre un moyen de sollicitation de pédale (58) pour solliciter la pédale dans la position repliée.

6. Attelage arrière de tracteur selon l'une quelconque des revendications précédentes, comprenant en outre un mécanisme de blocage de levier libérable (60) qui arrime véritablement l'organe de libération de barre d'attelage dans une position de fonctionnement.

7. Attelage arrière de tracteur selon la revendication 6, dans lequel le mécanisme de blocage de levier comprend un boulon qui est mobile en coulissement entre une position de blocage et une position de libération.

8. Attelage arrière de tracteur selon la revendication 7, dans lequel le boulon s'enclenche dans un orifice formé dans le levier lorsque le boulon est dans la position bloquée et l'organe de libération de barre d'attelage est dans la position de fonctionnement.

9. Attelage arrière de tracteur selon la revendication 7 ou la revendication 8, comprenant en outre un moyen de sollicitation de boulon (70) pour solliciter le boulon dans la position de blocage.

10. Attelage arrière de tracteur selon l'une quelconque des revendications 7, 8 ou 9, dans lequel le boulon peut être coulissé dans la position de blocage lorsque l'organe de libération de barre d'attelage est dans une position relevée de sorte que le boulon maintienne l'organe de libération de barre d'attelage, et ainsi la tige, dans la position relevée.

11. Attelage arrière de tracteur selon l'une quelconque des revendications 7 à 10, dans lequel le boulon est monté en coulissement sur le châssis support.

12. Attelage arrière de tracteur selon la revendication 11, dans lequel le boulon est actionné manuellement depuis l'arrière du tracteur.
